# EUROPÄISCHE PATENTSCHRIFT

(11) **EP 4 255 960 B1**
(45) Veröffentlichungstag und Bekanntmachung des Hinweises auf die Patenterteilung: **08.10.2025**
(21) Anmeldenummer: 21816069.5
(22) Anmeldetag: 29.11.2021
(51) Int. Cl.: C08G 64/30

(54) **VERFAHREN ZUR HERSTELLUNG EINES POLYCARBONATS UNTER VERWENDUNG EINES HALOGENIERTEN DIARYLCARBONATS**
PROCESS FOR THE PREPARATION OF A POLYCARBONATE USING A HALOGENATED DIARYL CARBONATE
PROCÉDÉ DE PRÉPARATION D'UN POLYCARBONATE UTILISANT UN CARBONATE DE DIARYLE HALOGÉNÉ

(30) Priorität: 02.12.2020 EP 20211145
(43) Veröffentlichungstag der Anmeldung: 11.10.2023
(73) Patentinhaber: Covestro Deutschland AG, 51373 Leverkusen (DE)
(72) Erfinder: GARSKA, Bernd, 50677 Köln (DE); HEIJL, Jan, 9160 Lokeren (BE); SLUYTS, Erik, 2930 Brasschaat (BE); YAO, Xiaoxin, Shanghai, 201199 (CN)
(74) Vertreter: Levpat
(86) Internationale Anmeldenummer: PCT/EP2021/083268
(87) Internationale Veröffentlichungsnummer: WO 2022/117472

(56) Entgegenhaltungen:
- DE-T2- 60 202 691

## Beschreibung

Gegenstand der vorliegenden Erfindung ist ein Verfahren zur Herstellung eines Polycarbonats aus einem Diarylalkohol oder mehreren Diarylalkoholen und einem Diarylcarbonat nach dem Schmelzeumesterungsverfahren. Dabei wird mindestens ein Teil des Diarylcarbonats durch Umsetzung von einem ganz oder teilweise halogeniertem Monophenol mit einem Carbonylhalogenid erhalten. Das erfindungsgemäße Verfahren zeichnet sich dadurch aus, dass ein halogeniertes Diarylcarbonat deutliche Vorteile in der Reaktionsführung bietet.

Sowohl Polycarbonate als auch deren Herstellung nach dem Schmelzeumesterungsverfahren sind aus dem Stand der Technik bekannt.

Bei der Herstellung von Polycarbonat durch Schmelzeumesterung werden Dihydroxyarylverbindungen mit Diarylcarbonaten zur Reaktion gebracht, wobei im Sinne einer Umesterungsreaktion die Monohydroxyarylverbindung aus den Diarylcarbonaten abgespalten wird. Die Aufkondensation führt zunächst zur Bildung niedermolekularer Polycarbonat-Oligomere, die unter fortgesetzter Abspaltung der Monohydroxyarylverbindung zu hochmolekularem Polycarbonat weiterreagieren. Der Reaktionsfortschritt kann durch den Einsatz geeigneter Katalysatoren gefördert werden.

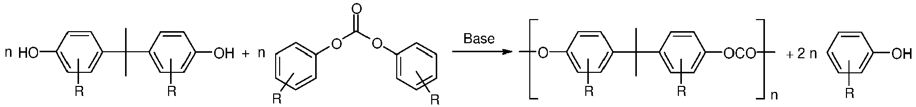

Die Herstellung aromatischer Polycarbonate nach dem Schmelzumesterungsverfahren ist bekannt und beispielsweise beschrieben in "Schnell", Chemistry and Physics of Polycarbonates, Polymer Reviews, Vol. 9, Interscience Publishers, New York, London, Sydney 1964, in D.C. Prevorsek, B.T. Debona and Y. Kersten, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), in D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich in Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299.

DE60202691T2 offenbart ein Verfahren zur Herstellung eines aromatischen Polycarbonats durch einen Schmelzumesterungsprozess aus einer aromatischen Dihydroxy-Verbindung und einem Kohlensäurediester, wobei der Kohlensäurediester Bis-(chlorphenyl)-carbonat sein kann.

Technisch sehr bedeutsam ist die Herstellung von hochmolekularem Polycarbonat aus 2,2-Bis(4-hydroxyphenyl)-propan (kurz auch Bisphenol A oder BPA genannt) und Diphenylcarbonat (kurz auch DPC genannt).

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben mittlere Molekulargewichte M_{w} (ermittelt durch Messung der relativen Lösungsviskosität mit einem Ubbelohdeviskosimeter bei 25°C in CH₂Cl₂ und einer Konzentration von 0,5 g pro 100 ml CH₂Cl₂) von 20.000 g/mol bis 32.000 g/mol, vorzugsweise von 23.000 g/mol bis 31.000 g/mol, insbesondere von 24.000 g/mol bis 31.000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in grundsätzlich bekannter Weise aus Diarylalkoholen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Strukturformel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.
Bevorzugt steht Z in Strukturformel (2) für einen Rest der Strukturformel (2) 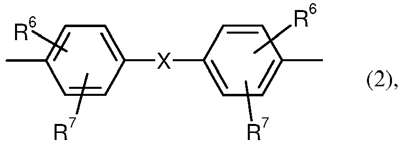 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.
Bevorzugt steht X für eine Einfachbindung, C₁- bis C₃-Alkylen, C₂- bis C₃-Alkyliden, C₃- bis C₆-Cycloalkyliden, -O-, -SO-, -CO-, -S-, -SO₂-
oder für einen Rest der Strukturformel (2a)

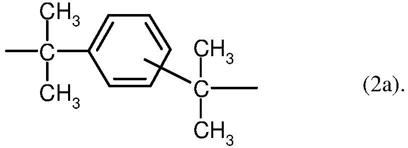

Beispiele für Diarylalkohole (Dihydroxyarylverbindungen) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diarylalkohole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diarylalkohole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (kurz auch Bisphenol TMC genannt).

Besonders bevorzugte Diarylalkohole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diarylalkohole sind z.B. in US 2 999 835 A, US 3 148 172 A, US 2 991 273 A, US 3 271 367 A, US 4 982 014 A und US 2 999 846 A, in den deutschen Offenlegungsschriften DE 1 570 703 A, DE 2 063 050 A, DE 2 036 052 A, DE 2 211 956 A und DE 3 832 396 A, der französischen Patentschrift FR 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diarylalkohol eingesetzt, im Falle von Copolycarbonaten werden zwei oder mehr verschiedene Diarylalkohole eingesetzt. Die verwendeten Diarylalkohole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

In der gleichen Weise werden eventuell zu verwendende Verzweiger oder Verzweigermischungen der Synthese zugesetzt. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diarylalkoholen, wobei die Verzweiger mit den Diarylalkoholen vorgelegt werden.

Alle diese Maßnahmen zur Herstellung der Polycarbonate sind dem Fachmann geläufig.

Sowohl Diarylcarbonate, als auch deren Herstellung, als auch deren Verwendung in einem Schmelzeumesterungsverfahren zur Herstellung von Polycarbonat sind aus dem Stand der Technik bekannt.

In Applied Catalysis A: General, Volume 316 (2007), 1-21 geben Gong, Ma und Wang eine Übersicht von Methoden zur Herstellung von Diarylcarbonate am Beispiel von Diphenylcarbonat. Es werden Methoden beschrieben ausgehend von Phosgen und Phenol, oder Kohlenmonoxid, Sauerstoff und Phenol, als auch ausgehend von Kohlenmonoxid, Sauerstoff und Methanol mit anschließend Umesterung von Dimethylcarbonat in Diphenylcarbonat mit Phenol, oder auch ausgehend von Methylnitrit und Kohlenmonoxid über Dimethyloxalat und Dimethylcarbonat mittels Umesterung. Weitere Methoden um Dimethylcarbonat herzustellen für die Umesterung mit Arylalkohole zu Diarylcarbonate sind beschrieben von Delledonne, Rivetti und Romano in Appl. Catal. A: Gen., 221 (2001), p. 241. Hier werden Methoden beschrieben ausgehend von Phosgen und Methanol, Harnstoff und Methanol, Kohlendioxid und Methanol, Kohlendioxid und Ethylenoxid über Ethylencarbonat als zwischenstufe für Umesterung mit Methanol, und auch die schon vorher vermeldete Reaktionen ausgehend von Kohlenmonoxid, Sauerstoff und Methanol, als auch Methylnitrit und Kohlenmonoxid.

In Labormaßstab ist die Herstellung von Diarylcarbonaten über Phosgen und einem Arylalkohol bevorzugt, wegen der einstufigen, schnellen und effizienten Reaktion bei niedrige Temperaturen und Drücken. Die in den Beispielen zur vorliegenden Erfindung eingesetzten Diarylcarbonate sind auch mittels Phosgen und Phenol oder substituiertem Phenol hergestellt, dies soll aber die Anwendbarkeit der beschriebene Diarylcarbonate in Schmelzeumesterung zu Polycarbonate nicht beschränken auf diese Herstellmethode der Diarylcarbonate.

Ein Nachteil der Schmelzeumesterungsverfahren zur Herstellung von Polycarbonat gemäß dem Stand der Technik ist, das ein Überschuss an Diarylcarbonat gegenüber dem Bisphenol gebraucht wird, und das trotz dieses Überschusses ein Teil der Endgruppen des Polymers nicht terminiert wird und somit auf reaktiven OH-Gruppen enden, als auch das unreagierte Bisphenol im erhaltenen Polycarbonat übrig bleibt. Außer dem erhöhten Einsatz an Diarylcarbonat ergibt sich als weiterer Nachteil eine längere Reaktionszeit bei der Herstellung des Polycarbonats, da ein erhöhter Einsatz von Diarylcarbonat die Reaktion zum Polycarbonat verlangsamt.

Aufgabe der vorliegenden Erfindung war es, die Nachteile des Stands der Technik zu überwinden. Insbesondere Aufgabe der vorliegenden Erfindung war es, ein Verfahren zur Herstellung eines Polycarbonats aus einem Diarylalkohol oder mehreren Diarylalkoholen und einem Diarylcarbonat nach dem Schmelzeumesterungsverfahren zur Verfügung zu stellen, bei dem ein gegenüber den herkömmlichen Verfahren geringerer Überschuss an Diarylcarbonat gegenüber dem Diarylalkoholen eingesetzt werden muss, ohne dass die Menge an reaktiven OH-Gruppen zunimmt oder mehr unreagiertes Bisphenol im erhaltenen Polycarbonat übrig bleibt.

Überraschend wurde gefunden, dass die Aufgabe durch ein Verfahren gemäß Hauptanspruch als erste Ausführungsform gelöst wird, nämlich durch ein Verfahren zur Herstellung von Polycarbonat mittels Schmelzeumesterung von wenigstens einem Diarylcarbonat und wenigstens einem Diarylalkohol,
wobei
0,1 bis 10 Gew.-% der Menge der eingesetzten Diarylcarbonate ein halogeniertes Diarylcarbonat ist oder wobei
95 bis bis 99 Gew.-%, der Menge der eingesetzten Diarylcarbonate ein halogeniertes Diarylcarbonat ist.

Erfindungsgemäß bevorzugt ist dabei, dass 0,2 bis 3 Gew.-%, bevorzugt 0,3 bis 1 Gew.-%, der Menge der eingesetzten Diarylcarbonate ein halogeniertes Diarylcarbonat ist.

Diese bevorzugte Ausführungsform des erfindungsgemäßen Verfahrens stellt eine zweite Ausführungsform nach der oben dargestellten ersten Ausführungsform dar.

Weiter erfindungsgemäß bevorzugt ist dabei, dass 96 bis 98 Gew.-%, der Menge der eingesetzten Diarylcarbonate ein halogeniertes Diarylcarbonat ist.

Diese weiter bevorzugte Ausführungsform des erfindungsgemäßen Verfahrens stellt eine dritte Ausführungsform nach der oben dargestellten ersten Ausführungsform dar.

Weiter erfindungsgemäß bevorzugt ist dabei, dass das halogenierte Diarylcarbonat ausgewählt ist aus der Gruppe umfassend die Mitglieder Di-(Halogenphenyl)-carbonat und Halogenphenyl-Phenylcarbonat, sowie beliebigen Mischungen aus einem Di-(Halogenphenyl)-carbonat und einem Halogenphenyl-Phenylcarbonat.

Diese weiter bevorzugte Ausführungsform des erfindungsgemäßen Verfahrens stellt eine vierte Ausführungsform nach einer der oben dargestellten Ausführungsformen dar, insbesondere stellt diese vierte Ausführungsform eine Ausführungsform nach der oben dargestellten ersten Ausführungsform dar oder der oben dargestellten zweiten Ausführungsform dar oder der oben dargestellten dritten Ausführungsform dar.

Besonders erfindungsgemäß bevorzugt ist dabei, dass das Di-(Halogenphenyl)-carbonat ein Di-(2-Halogenphenyl)-carbonat ist.

Diese besonders bevorzugte Ausführungsform des erfindungsgemäßen Verfahrens stellt eine fünfte Ausführungsform nach der oben dargestellten vierten Ausführungsform dar.

Außerdem besonders erfindungsgemäß bevorzugt ist dabei, dass das Halogenphenyl-Phenylcarbonat ein 2-Halogenphenyl-Phenylcarbonat ist.

Diese besonders bevorzugte Ausführungsform des erfindungsgemäßen Verfahrens stellt eine sechste Ausführungsform nach der oben dargestellten vierten Ausführungsform dar.

Ganz besonders erfindungsgemäß bevorzugt ist dabei, dass das Di-(Halogenphenyl)-carbonat Di-(2-Fluorphenyl)-carbonat oder Di-(2-Chlorphenyl)-carbonat ist.

Diese besonders bevorzugte Ausführungsform des erfindungsgemäßen Verfahrens stellt eine siebte Ausführungsform nach der oben dargestellten fünften Ausführungsform dar.

Außerdem besonders erfindungsgemäß bevorzugt ist dabei, dass das 2-Halogenphenyl-Phenylcarbonat 2-Fluorphenyl-Phenylcarbonat oder 2-Chlorphenyl-Phenylcarbonat ist.

Diese besonders bevorzugte Ausführungsform des erfindungsgemäßen Verfahrens stellt eine achte Ausführungsform nach der oben dargestellten sechsten Ausführungsform dar.

Weiter erfindungsgemäß bevorzugt ist dabei, dass der wenigstens eine Diarylalkohol Bisphenol A ist.

Diese weiter bevorzugte Ausführungsform des erfindungsgemäßen Verfahrens stellt eine neunte Ausführungsform nach der oben dargestellten ersten Ausführungsform dar.

Ein weiterer Gegenstand der vorliegenden Erfindung ist auch ein Polycarbonat, hergestellt nach einem Verfahren wie in einer der oben aufgeführten Ausführungsformen dargestellt.

Insbesondere wurde gefunden, dass die Aufgabe gelöst wird durch das erfindungsgemäße Schmelzeumesterungsverfahren zur Herstellung von Polycarbonat unter Verwendung bestimmter substituierter Diarylcarbonate (Strukturformel X, wobei R1 und R2 unabhängig voneinander ein Substituent anders als Wasserstoff sein können), wodurch einerseits der Überschuss an Diarylcarbonat verringert wird, andererseits die Menge an Restmonomeren, die nach der Reaktion übrig bleiben, verringert wird, ohne dass der Massenanteil an Endgruppen, die nicht terminiert sind, also auf reaktiven OH-Gruppen enden, ansteigt.

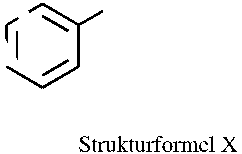

Besonders geeignet sind dabei halogenierte Diarylcarbonate ausgewählt aus der Gruppe umfassend die Mitglieder Di-(Halogenphenyl)-carbonat und Halogenphenyl-Phenylcarbonat, sowie beliebige Mischungen aus einem Di-(Halogenphenyl)-carbonat und einem Halogenphenyl-Phenylcarbonat. Erfindungsgemäß geeignete Di-(Halogenphenyl)-carbonate sind beispielsweise Di-(Fluorphenyl)-carbonat oder Di-(Chlorphenyl)-carbonat oder beliebige Gemische aus einem Di-(Fluorphenyl)-carbonat und einem Di-(Chlorphenyl)-carbonat. Weiterhin hat sich gezeigt, dass die Position des Halogens auf dem Phenolring wichtig ist für die Reaktivität im erfindungsgemäßen Verfahren zur Herstellung eines Polycarbonats. Besonders geeignet für die Umesterung sind Di-(2-Halogenphenyl)-carbonate (Strukturformel Y, wobei X ein Halogenatom ist), wie Di-(2-Fluorphenyl)-carbonat oder Di-(2-Chlorphenyl)-carbonat oder Gemische aus Di-(2-Fluorphenyl)-carbonat und Di-(2-Chlorphenyl)-carbonat.

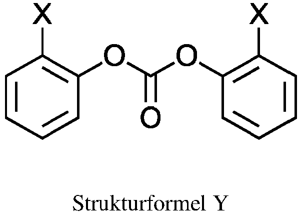

Es ist sehr schwierig, die Di-(2-Halogenphenyl)-carbonate mit einer Reinheit von mindestens 99,5 Gew.-% zu erhalten, weil sehr oft neben der in der 2-Position halogenierten Variante (Strukturformel Y) auch die in der 4-Position halogenierte Variante (Strukturformel Z) in kleine Mengen als Verunreinigung im ppm-Bereich vorliegt, jedoch immer weniger als 1 Gew.-%. Zwar stört die Anwesenheit von in der 4-Position halogenierten Diarylcarbonaten das erfindungsgemäße Verfahren nicht, solange deren Anteil gegenüber dem Anteil der in 2-Position halogenierten Diarylcarbonaten unter 1 Gew.-% bleibt, aber Di-(4-halogenphenyl)-carbonate (Strukturformel Z), obwohl die auch wirksam sind, sind an sich weniger geeignet für die Umesterung als Di-(2-halogenphenyl)-carbonate, da Di-(4-halogenphenyl)-carbonate gegenüber Di-(2-halogenphenyl)-carbonaten eine höhere Reaktionstemperatur und ein tieferes Vakuum brauchen, um bei der Herstellung von Polycarbonaten den gleichen Reaktionsfortschritt zu erzielen wie beim Einsatz von Di-(2-halogenphenyl)-carbonaten.

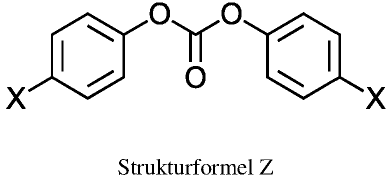

Auch asymmetrisch halogensubstituierte Diarylcarbonate (Strukturformel O, wobei X ein Halogenatom ist) sind besonders geeignet für die Schmelzeumesterung mit Diarylalkoholen zur Herstellung von Polycarbonaten. Zum Beispiel können selbst kleine Mengen dieser asymmetrisch halogensubstituierten Diarylcarbonate in der Menge des zugegebenen Diphenylcarbonats bewirken, dass eine geringere Reaktionstemperatur oder ein weniger tiefes Vakuum nötig ist, um bei der Herstellung von Polycarbonat den gleichen Reaktionsfortschritt zu erzielen wie er ohne den Einsatz asymmetrisch halogensubstituierter Diarylcarbonate gegeben wäre. Erfindungsgemäß geeignete Halogenphenyl-Phenylcarbonate sind beispielsweise Fluorphenyl-Phenylcarbonate oder Chlorphenyl-Phenylcarbonate oder beliebige Gemische aus einem Fluorphenyl-Phenylcarbonat und einem Chlorphenyl-Phenylcarbonat, wobei als Fluorphenyl-Phenylcarbonate besonders 2-Fluorphenyl-Phenylcarbonat und als Chlorphenyl-Phenylcarbonate besonders 2-Chlorphenyl-Phenylcarbonat geeignet ist.

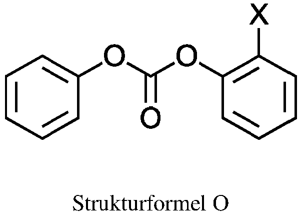

Durch Verwendung dieser Substanzen laut den Formeln X, Z oder O kann die Verweilzeit im Schmelzeumesterungsverfahren zur Herstellung von Polycarbonat verkürzt und somit bei unveränderten Reaktionsparametern der Durchsatz bei der Herstellung von Polycarbonat bei gleichen Eigenschaften des Polycarbonats signifikant erhöht werden, und/oder können niedrigere Drücke und/oder Temperaturen angewandt werden, ohne dass die Qualität des erhaltenen Polycarbonats sich verschlechtert oder es zu einer verringerten Ausbeute kommt.

### Verwendete Methoden:

### Gelpermeationschromatographie:

GPC Untersuchungen wurden mittels folgenden Apparates durchgeführt:
Agilent 12 Serie. Agilent PLgel mixed 5µm Säulen (X 5) + infinity 1260 Detektor mit einer Wellenlänge von 254 nm und Methylenchlorid als mobile Phase mit einer Flussrate von 1.0 mL min-¹ bei 30°C.

Die Säulen wurden mittels Polycarbonatstandard im Bereich von Mp 7,000 bis 63,000 g.mol-1 kalibriert.

### Infrarotmessungen OH- Endgruppen:

HATR Messungen wurden mittels PerkinElmer Spectrum 100 mit ATR Aufsatz mit einem ZnSe 45° Kristall gemessen. Ein MCT/A Detektor im Bereich von 650 bis 4000 cm⁻¹ wurde verwendet. Die Proben wurden in THF gelöst und mit einer THF Blindprobe abgeglichen. Das fertige Spektrum setzt sich aus 32 Scans mit einer Zeit von jeweils 32 Sekunden zusammen.

### Restmonomere:

10 g Polycarbonat werden in 25 mL Aceton für 2h unter Rückfluss gekocht. Anschließend werden 25 mL Methanol zugegeben und ausgeschüttelt. Die obere Phase wird in eine HPLC injiziert. Restmonomere werden auf dieser HPLC von Agilent und einer Zorbax 3.5 SB18 4.6*50mm Säule (oder: Halo 5 phenyl-hexyl 4.6 * 75 mm Säule) bestimmt. Als Detektor wird UV6000LP (or FL3000) verwendet. Das Injizierte Volumen beträgt 5µL, die mobile Phase ist Acetonitril

### Beispiel 1 (Vergleichsbeispiel)

### a) Herstellung und Aufarbeitung von Diphenylcarbonat (DPC)

In eine kontinuierlich betriebene Laboranlage wurde bei 25 °C eine Natriumphenolatlösung (188,23 Gramm Phenol in 481,96 Gramm VE Wasser mit 81.21 Gramm Natronlauge) mit insgesamt 751,4 Gramm pro Stunde eingeleitet und mit 101,88 Gramm pro Stunde Phosgen in 846,69 Gramm eines Lösungsmittelgemischs (1:1 Gewichtsverhältnis Chlorbenzol : Methylenchlorid) gemischt. Das Gemisch wurde in eine Fink HMR040 Mischpumpe dosiert. Danach wurden 14,97 Gramm pro Stunde 32.09 gewichtsprozentige Natronlauge in Wasser hinzugefügt und in eine weitere Fink HMR040 Mischpumpe überführt. Das Reaktionsgemisch wurde in einen geflutet gefahrenen Rührreaktor mit N-Ethylpiperidin zur vollständigen Umsetzung zum Diphenylcarbonat gebracht. Die organische Phase wurde abgetrennt und mit 1 Gew.-%iger HCl Lösung und anschließend mit VE Wasser gewaschen. Das Lösungsmittel wurde mittels Destillation entfernt.

### b) Herstellung von Polycarbonat

In einem 3-Halskolben mit Ölbeheizung, Rührer, mit Kurzwegabscheider und Kühlfalle mit Vakuumanschluss wurden 79,91 Gramm Bisphenol A (0,35 Mol) und 78,82 Gramm Diphenylcarbonat (0,37 Mol) aus a) mit 106,6 µl Katalysatorlösung (5 Gew.-% Tetraphenylphosphoniumphenolat in Phenol) bei 205 °C unter Stickstoff geschmolzen. Das molare Verhältnis zwischen DPC und BPA ist dadurch zu 1.048 eingestellt. Der Temperatur wurde auf 230 °C erhöht, und der Druck auf 200 mbar erniedrigt. Druck und Temperatur werden schrittweise angepasst, um entstehendes Phenol aus dem Gemisch zu entfernen (siehe folgende Tabelle 1).

**Tabelle 1: Reaktionsverlauf, Temperatur, Druck und Zeit**

| **T (°C)** | **P (mbar)** | **t (min)** |
|---|---|---|
| 205 | 1013 | 40 |
| 230 | 200 | 20 |
| 245 | 100 | 20 |
| 275 | 50 | 20 |
| 285 | 25 | 20 |
| 315 | 4 | 45 |
| 330 | <1 | 45 |

Das entstandene Polycarbonat zeigte 33 ppm Rest Phenol, 15 ppm Rest BPA, als auch 521 ppm OH endgruppen (Gewichts-ppm zu Masse Polycarbonat).

### Beispiel 2 und 3 a)

Das in Beispiel 1 a) beschriebene Verfahren wird nacheinander jeweils mit 2-Fluorphenol (191,96 Gramm in 504,83 Gramm VE Wasser und 69,53 Gramm Natronlauge) und 2-Chlorphenol (194,55 Gramm in 520,65 Gramm VE Wasser und 51,45 Gramm Natronlauge) wiederholt.

Schon in der Herstellung der Diarylcarbonate wurde deutlich, dass die durch das 2-Chlorphenol oder das 2-Fluorphenol in dieser Reaktionsführung gebildeten Anionen stabiler als das Phenolat-Anion sind und es deshalb mehr von den aromatischen Alkoholen in der wässrigen Phase des Reaktiongemisches gab. Es wurden bei Phenol 41 ppm (Gewicht), bei 2-Fluorphenol 2430 ppm und bei 2-Chlorphenol 1310 ppm in der wässrige Phase gefunden.

### Beispiel 2 und 3 b)

Das Verfahren aus Beispiel 1 b) wurde wiederholt mit Di-(2-Fluorphenyl)-carbonat und Di-(2-Chlorphenyl)-carbonat. Das molare Verhältnis des Di-(2-Fluorphenyl)-carbonats bzw. Di-(2-Chlorphenyl)-carbonats zu Bisphenol A wurde erniedrigt auf 1,03, also respektive 88,46 Gramm Di-(2-Fluorphenyl)-carbonat und 102,26 Gramm Di-(2-Chlorphenyl)-carbonat wurden eingesetzt.

In Beispiel 2 mit 2-Fluorphenol wurde das Temperatur/Druck Profil angepasst, um den höheren Dampfdruck des 2-Fluorphenols gegenüber Phenol zu kompensieren (Tabelle 2).

**Tabelle 2: Reaktionsverlauf, Temperatur, Druck und Zeit**

| **T (°C)** | **P (mbar)** | **t (min)** |
|---|---|---|
| 205 | 1013 | 40 |
| 230 | 650 | 20 |
| 245 | 550 | 20 |
| 275 | 200 | 20 |
| 285 | 25 | 20 |
| 315 | 4 | 45 |
| 330 | <1 | 45 |

Das entstandene Polycarbonat aus Beispiel 2 enthielt 26 ppm 2-Fluorphenol, weniger als 0,5 ppm Bisphenol A (unterhalb der Nachweisgrenze), und hatte 194 ppm OH Endgruppen.

In Beispiel 3 mit 2-Chlorphenol wurde das Temperatur/Druck Profil angepasst, um den höheren Dampfdruck des 2-Chlorphenols gegenüber Phenol zu kompensieren (Tabelle 3).

**Tabelle 3: Reaktionsverlauf, Temperatur, Druck und Zeit**

| **T (°C)** | **P (mbar)** | **t (min)** |
|---|---|---|
| 205 | 1013 | 40 |
| 230 | 500 | 20 |
| 245 | 400 | 20 |
| 275 | 300 | 20 |
| 285 | 200 | 20 |
| 315 | 4 | 45 |
| 330 | <1 | 45 |

Das entstandene Polycarbonat aus Beispiel 3 enthielt 38 ppm 2-Chlorphenol, 3 ppm Bisphenol A, und hatte 131 ppm OH Endgruppen.

### Beispiel 4

In einer Anlage zur kontinuierlichen Herstellung von Polycarbonat nach dem Schmelzeumesterungsverfahren - wie beispielsweise aus EP 2272890 A1 bekannt - wurde reines Diphenylcarbonat eingesetzt (> 99,5 Gew.-% Diphenylcarbonat, < 2 ppm Chlorgehalt im Diphenylcarbonat). Dies wurde wie in Beispiel 1b mit Bisphenol A als Monomer und Tetraphenylphosphoniumphenolat als Katalysator durch mehrere Druck- und Temperaturstufen geleitet, bis eine Endtemperatur von 301 °C, und ein absoluter Druck von ungefähr 2 mbar erreicht wurden. Es konnte mit Standarddurchsatz (normiert auf produziertes Polycarbonat = 100 %) eine relative Lösungsviskosität (ermittelt mit einem Ubbelohdeviskosimeter bei 25°C in CH₂Cl₂ und einer Konzentration von 0,5 g pro 100 ml CH₂Cl₂) von 1,309 erreicht werden, und das entstandene Polycarbonat enthielt weniger als 20 ppm freies Bisphenol A, und 520 ppm OH Endgruppen.

### Beispiel 5

In einem Verfahren wie in Beispiel 4 beschrieben, wurde Diphenylcarbonat eingesetzt, welches 0,63 Gew.-% 2-Chlorphenyl-Phenylcarbonat (900 ppm Chlorgehalt im Diphenylcarbonat) enthielt. Es wurde wie in Beispiel 4 mit Bisphenol A als Monomer und Tetraphenylphosphoniumphenolat als Katalysator durch mehreren Druck- und Temperaturstufen geleitet, bis ein Endtemperatur von 298 °C und ein absouter Druck von ungefähr 1 mbar erreicht wurde. Wegen der höheren Reaktivität des 2-Chlorphenyl-phenylcarbonats konnte mit einen normierten Durchsatz von 141 % Polycarbonat produziert werden, wobei eine relative Lösungsviskosität (ermittelt mit einem Ubbelohdeviskosimeter bei 25°C in CH₂Cl₂ und einer Konzentration von 0,5 g pro 100 ml CH₂Cl₂) von 1,312, weniger als 20 ppm freies Bisphenol A und 518 ppm OH Endgruppen analysiert wurden.

## Patentansprüche

1. Verfahren zur Herstellung von Polycarbonat mittels Schmelzeumesterung von wenigstens einem Diarylcarbonat und wenigstens einem Diarylalkohol,
**dadurch gekennzeichnet,**
**dass** 0,1 bis 10 Gew.-% der Menge der eingesetzten Diarylcarbonate ein halogeniertes Diarylcarbonat ist,
oder
**dass** 95 bis bis 99 Gew.-% der Menge der eingesetzten Diarylcarbonate ein halogeniertes Diarylcarbonat ist.

2. Verfahren nach Anspruch 1, wobei 0,2 bis 3 Gew.-%, bevorzugt 0,3 bis 1 Gew.-%, der Menge der eingesetzten Diarylcarbonate ein halogeniertes Diarylcarbonat ist.

3. Verfahren nach Anspruch 1, wobei 96 bis 98 Gew.-%, der Menge der eingesetzten Diarylcarbonate ein halogeniertes Diarylcarbonat ist.

4. Verfahren nach einem der Ansprüche 1 bis 3, wobei das halogenierte Diarylcarbonat ausgewählt ist aus der Gruppe umfassend die Mitglieder Di-(Halogenphenyl)-carbonat und Halogenphenyl-Phenylcarbonat, sowie beliebigen Mischungen aus einem Di-(Halogenphenyl)-carbonat und einem Halogenphenyl-Phenylcarbonat.

5. Verfahren nach Anspruch 4, wobei das Di-(Halogenphenyl)-carbonat ein Di-(2-Halogenphenyl)-carbonat ist.

6. Verfahren nach Anspruch 4, wobei das Halogenphenyl-Phenylcarbonat ein 2-Halogenphenyl-Phenylcarbonat ist.

7. Verfahren nach Anspruch 5, wobei das Di-(Halogenphenyl)-carbonat Di-(2-Fluorphenyl)-carbonat oder Di-(2-Chlorphenyl)-carbonat ist.

8. Verfahren nach Anspruch 6, wobei das 2-Halogenphenyl-Phenylcarbonat 2-Fluorphenyl-Phenylcarbonat oder 2-Chlorphenyl-Phenylcarbonat ist.

9. Verfahren nach Anspruch 1, wobei der wenigstens eine Diarylalkohol Bisphenol A ist.

10. Polycarbonat, hergestellt nach einem Verfahren nach einem der Ansprüche 1 bis 9.

## Claims

1. Process for producing polycarbonate by means of melt transesterification of at least one diaryl carbonate and at least one diaryl alcohol,
**characterized**
**in that** 0.1% to 10% by weight of the amount of diaryl carbonates used is a halogenated diaryl carbonate,
or
**in that** 95% to 99% by weight of the amount of diaryl carbonates used is a halogenated diaryl carbonate.

2. Process according to Claim 1, wherein 0.2% to 3% by weight, preferably 0.3% to 1% by weight, of the amount of diaryl carbonates used is a halogenated diaryl carbonate.

3. Process according to Claim 1, wherein 96% to 98% by weight of the amount of diaryl carbonates used is a halogenated diaryl carbonate.

4. Process according to any of Claims 1 to 3, wherein the halogenated diaryl carbonate is selected from the group comprising the members di(halophenyl) carbonate and halophenyl phenyl carbonate, and any desired mixtures of a di(halophenyl) carbonate and a halophenyl phenyl carbonate.

5. Process according to Claim 4, wherein the di(halophenyl) carbonate is a di(2-halophenyl) carbonate.

6. Process according to Claim 4, wherein the halophenyl phenyl carbonate is a 2-halophenyl phenyl carbonate.

7. Process according to Claim 5, wherein the di(halophenyl) carbonate is di(2-fluorophenyl) carbonate or di(2-chlorophenyl) carbonate.

8. Process according to Claim 6, wherein the 2-halophenyl phenyl carbonate is 2-fluorophenyl phenyl carbonate or 2-chlorophenyl phenyl carbonate.

9. Process according to Claim 1, wherein the at least one diaryl alcohol is bisphenol A.

10. Polycarbonate produced by a process according to any of Claims 1 to 9.

## Revendications

1. Procédé de préparation de polycarbonate au moyen d'une transestérification en masse fondue d'au moins un carbonate de diaryle et d'au moins un alcool diarylique,
**caractérisé**
**en ce que** 0,1 à 10% en poids de la quantité des carbonates de diaryle utilisés sont constitués par un carbonate de diaryle halogéné,
ou
**en ce que** 95 à 99% en poids de la quantité des carbonates de diaryle utilisés sont constitués par un carbonate de diaryle halogéné.

2. Procédé selon la revendication 1, dans lequel 0,2 à 3% en poids, de préférence 0,3 à 1% en poids de la quantité des carbonates de diaryle utilisés sont constitués par un carbonate de diaryle halogéné.

3. Procédé selon la revendication 1, dans lequel 96 à 98% en poids de la quantité des carbonates de diaryle utilisés sont constitués par un carbonate de diaryle halogéné.

4. Procédé selon l'une des revendications 1 à 3, dans lequel le carbonate de diaryle halogéné est choisi dans le groupe comprenant les éléments carbonate de di-(halogénophényle) et carbonate d'halogénophényl-phényle ainsi que les mélanges quelconques d'un carbonate de di-(halogénophényle) et d'un carbonate d'halogénophényl-phényle.

5. Procédé selon la revendication 4, dans lequel le carbonate de di-(halogénophényle) est un carbonate de di-(2-halogénophényle).

6. Procédé selon la revendication 4, dans lequel le carbonate d'halogénophényl-phényle est un carbonate de 2-halogénophényl-phényle.

7. Procédé selon la revendication 5, dans lequel le carbonate de di-(halogénophényle) est un carbonate de di-(2-fluorophényle) ou un carbonate de di-(2-chlorophényle).

8. Procédé selon la revendication 6, dans lequel le carbonate de 2-halogénophényl-phényle est le carbonate de 2-fluorophényl-phényle ou le carbonate de 2-chlorophényl-phényle.

9. Procédé selon la revendication 1, dans lequel ledit au moins un alcool diarylique est le bisphénol A.

10. Polycarbonate, préparé selon un procédé selon l'une des revendications 1 à 9.
